Europäisches Patentamt

European Patent Office

Office européen des brevets

(19)

(11) **EP 0 672 975 B1**

(12) **FASCICULE DE BREVET EUROPEEN**

(45) Date de publication et mention
de la délivrance du brevet:
**04.06.1997 Bulletin 1997/23**

(51) Int Cl.⁶: **G04C 3/14**, H02P 8/02,
H02P 8/38

(21) Numéro de dépôt: **94810167.0**

(22) Date de dépôt: **17.03.1994**

(54) **Procédé d'alimentation d'un moteur pas à pas monophasé et circuit pour sa mise en oeuvre**

Verfahren zur Versorgung eines einphasigen Schrittmotors sowie Schaltung hierfür

Single phase stepper motor supplying method and circuit therefor

(84) Etats contractants désignés:
**AT BE CH DE ES FR GB GR IT LI LU NL SE**

(43) Date de publication de la demande:
**20.09.1995 Bulletin 1995/38**

(73) Titulaire: **DETRA SA
CH-2504 Bienne (CH)**

(72) Inventeurs:
• **Tu, Mai Xuan
CH-1024 Ecublens (CH)**
• **Schwab, Michel
CH-2502 Bienne (CH)**

(74) Mandataire: **Fischer, Franz Josef et al
BOVARD SA
Ingénieurs-Conseils ASCPI
Optingenstrasse 16
3000 Bern 25 (CH)**

(56) Documents cités:
**EP-A- 0 345 224          GB-A- 2 076 566**

**Description**

La présente invention a pour objet un procédé d'alimentation d'un moteur pas à pas pour pièce d'horlogerie et un circuit d'entraînement pour sa mise en oeuvre (GB-A-2 076 566).

La plupart des circuits d'alimentation de moteur pour montre à quartz délivrent à la bobine du moteur une impulsion de tension de durée et d'amplitude constantes. Ce mode d'alimentation présente l'inconvénient d'une trop grande consommation d'énergie et par conséquent une réduction de la durée de vie de la pile. Plusieurs solutions ont été apportées dans le but d'une réduction de la consommation du moteur en fournissant à ce dernier une impulsion d'alimentation variable en fonction de sa charge mécanique.

Dans le brevet EP 0 345 224 B1, les auteurs proposent un procédé d'alimentation d'un moteur pas à pas monophasé fournissant à ce dernier une suite d'impulsions de même polarité et de durée T4 constante, séparées entre elles par des intervalles de temps T5i variables en fonction des conditions de charge et en fonction de la tension d'alimentation, chaque intervalle de temps T5i étant délimité par la fin d'une impulsion partielle Ty et par l'instant suivant cette fin où le courant de la bobine est plus petit ou égal à une valeur de référence Iréf. Le procédé précité a l'avantage d'une simplicité de mise en oeuvre du circuit logique de commande, mais présente en revanche deux inconvénients majeurs, à savoir:

- Pour que le procédé fonctionne correctement, il faut que le courant de référence Iréf soit assez précis dans une gamme de tension et de température assez large. Si cette précision peut être atteinte techniquement, elle implique néanmoins un renchérissement du circuit.

- En cas de perturbation extrême, comme par exemple lors d'un grand choc, le moteur peut perdre des pas.

Le but de la présente invention est de proposer un nouveau procédé d'alimentation permettant de remédier aux inconvénients cités ci-dessus, tout en assurant une économie de l'énergie consommée par le moteur.

L'invention sera mieux comprise à la lecture de la description qui suit, faite en référence aux dessins annexés, dans lesquels:

- les figures 1a, 1b, 1c et 1d représentent le courant, la tension, la vitesse angulaire et l'angle de rotation du rotor d'un moteur pas à pas alimenté selon le procédé de l'invention, le moteur n'étant pas chargé;

- les figures 2a et 2b représentent l'agrandissement des figures 1a et 1b;

- les figures 3a, 3b, 3c et 3d représentent le courant, la tension, la vitesse angulaire et l'angle de rotation du rotor d'un moteur pas à pas alimenté selon le procédé de l'invention, le moteur étant chargé par un couple important;

- les figures 4a et 4b représentent l'agrandissement des figures 3a et 3b;

- les figures 5a et 5b représentent le courant et la tension du moteur lorsque la polarité de l'impulsion est différente de celle du rotor;

- la figure 6 représente les impulsions de renforcement;

- la figure 7 représente le schéma bloc d'un exemple de réalisation du procédé d'alimentation selon l'invention;

- la figure 8 représente le détail de l'élément 75 du schéma bloc de la figure 7.

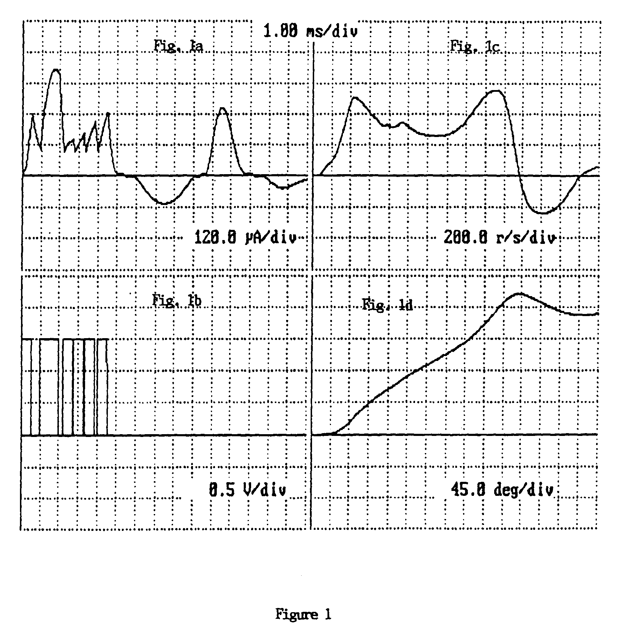

Les figures 1a, 1b, 1c et 1d représentent respectivement le courant, la tension, la vitesse angulaire et l'angle de rotation du rotor d'un moteur pas à pas monophasé alimenté selon le procédé de la présente invention, le moteur tournant à vide, c'est-à-dire sans couple mécanique. Dans ce cas, la vitesse angulaire du moteur est assez élevée (environ 600 rad/s) et le moteur fait son pas de 0 à 180° après environ 15 ms.

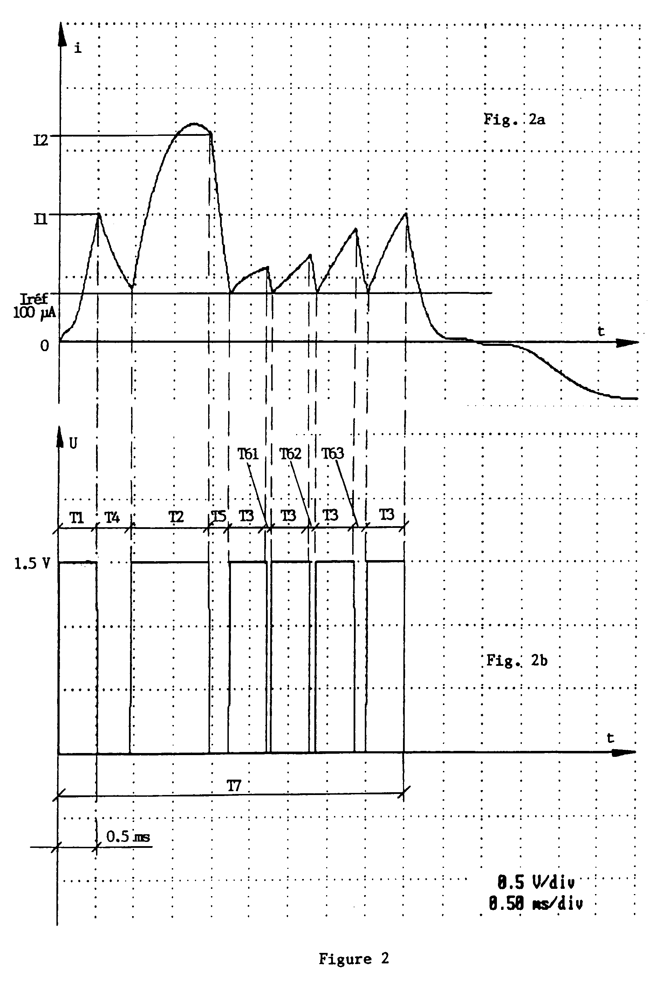

Les figures 2a et 2b représentent l'agrandissement des figures 1a et 1b. L'impulsion de tension hachée de durée T7 est formée d'une suite d'impulsions partielles de durées T1, T2 et T3 prédéterminées. Dans cet exemple

$$T1 = 0,5 \text{ ms}$$

T2 = 1 ms

T3 = 0,5 ms

Ces impulsions partielles sont séparées entre elles par des intervalles T4, T5 et T6i (i = 1 à 3).

La succession des impulsions partielles se fait de la façon suivante: initialement, le moteur est alimenté par une impulsion de tension constante de durée T1; le courant dans la bobine augmente de zéro à la valeur I1. Après cette durée T1, la bobine du moteur est mise en court-circuit. Le courant dans la bobine décroît à partir du temps t = T1 de la valeur I1 jusqu'à une valeur de référence Iréf. A partir de cet instant, c'est-à-dire l'instant t = T1 + T4, la bobine est à nouveau alimentée par une tension constante de durée T2. Le courant dans la bobine croit de Iréf à I2. A l'instant t = T1 + T4 + T2, la bobine est mise en court-circuit. Le courant décroît de I2 jusqu'à Iréf à l'instant t = T1 + T4 + T2 + T5. A partir de cet instant, le processus d'alimentation se répète avec une durée d'alimentation constante T3, les intervalles de temps séparant les impulsions partielles de durée T3 sont dénommées T6i. Le processus d'alimentation s'interrompt lorsqu'une des conditions suivantes apparaît:

- Le nombre d'impulsions partielles de durée T3 atteint une valeur limite, dans cet exemple le nombre limite est fixé à 4.

- L'un des intervalles de temps T6i dépasse une valeur limite. Dans cet exemple, la valeur limite fixée à 2 ms n'est pas atteinte.

- La durée totale T7 de l'impulsion dépasse une valeur limite. Dans cet exemple, cette valeur limite fixée à 12 ms n'est pas atteinte.

La durée totale de l'impulsion T7 selon le procédé d'alimentation de la présente invention est donnée par

$$T7 = T1 \quad T2 + kT3 + T4 + T5 + \sum_{i=1}^{k-1} T6i$$

Dans cet exemple k = 4

On constate que la durée totale est égale à une valeur constante prédéterminée ( T1 + T2 + k*T3) et une durée variable selon les conditions de charge du moteur, à savoir:

$$T4 + T5 + \sum_{i=1}^{k-1} T6i$$

Cette durée variable est d'autant plus grande que la charge du moteur est importante. En effet, les durées T4, T5 et T6i sont déterminées par le temps de décroissance du courant dans la bobine lorsque cette dernière est mise en court-circuit. Cette décroissance est définie par l'équation de tension du moteur,

$$0 = Ri + L\, di/dt + k\Omega \tag{1}$$

ou

$$di/dt = - (Ri + k\Omega)L \tag{2}$$

dans les expressions (1) et (2)

L = inductance du moteur
R = résistance du moteur
i = courant
t = temps
k = facteur de couplage exprimant la variation du flux mutuel entre l'aimant et la bobine
$\Omega$ = vitesse angulaire

Lorsque la charge du moteur est importante, la vitesse de rotation diminue, ce qui entraîne une décroissance moins rapide du courant et par conséquent une augmentation du temps de décroissance.

L'alimentation selon l'invention permet donc de fournir au moteur une durée d'impulsion s'adaptant à la charge mécanique.

Cette adaptation permet d'assurer au moteur un bon fonctionnement dans les conditions de charge normales. Lors de conditions de charge extrêmes, par exemple lors de chocs de grande amplitude, l'impulsion de durée T7 ne peut plus assurer le pas du moteur.

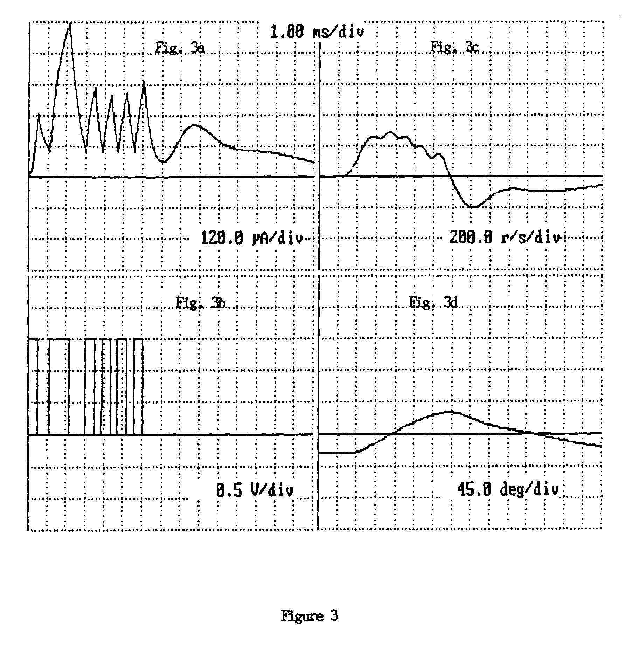

Les figures 3a, 3b, 3c et 3d représentent respectivement le courant, la tension, la vitesse angulaire et l'angle de rotation du moteur lors d'une charge importante. On constate que la vitesse angulaire du moteur est nettement plus faible que celle dans l'exemple de la figure lc; de plus, le moteur perd son pas suite à cette charge importante (0,35 µNm dans cet exemple).

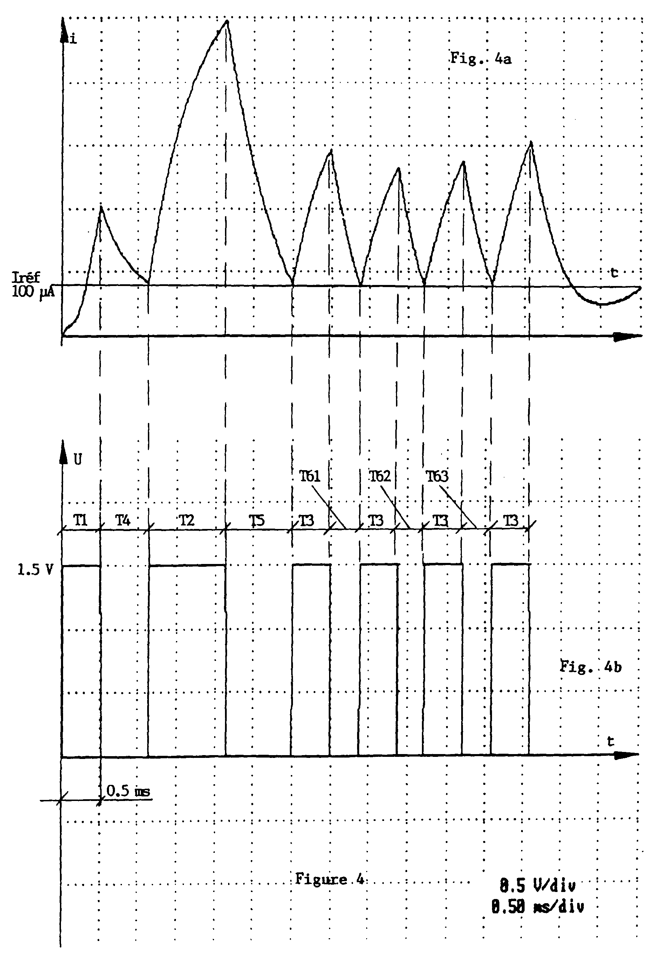

Les figures 4a et 4b représentent l'agrandissement des figures 3a et 3b. On constate une augmentation des durées T4 et T5 par rapport au cas représenté par les figures 2a et 2b. L'explication de cette augmentation des durées de décroissance du courant a été fournie à travers les expressions (1) et (2). La cause principale de cette augmentation est la diminution de la vitesse angulaire du moteur.

En comparant les valeurs T4 et T5 données par les figures 2a et 2b, respectivement 4a et 4b, on obtient les résultats suivants:

Moteur à vide (fig. 2a et 2b)

$$T4 = 0,43 \text{ ms}$$

$$T5 = 0,27 \text{ ms}$$

$$\Delta T = T4 - T5 = 0,16 \text{ ms}$$

Moteur avec charge extrême (fig. 4a et 4b)

$$T4 = 0,61 \text{ ms}$$

$$T5 = 0,85 \text{ ms}$$

$$\Delta T = T4 - T5 = -0,24 \text{ ms}$$

On constate donc un changement de signe de $\Delta T$ entre la marche à vide et la marche avec charge extrême.

Des essais systématiques avec d'autres valeurs de T1 et T2 ont montré que la condition de charge extrême dépendait essentiellement de ces durées et peu de la valeur de Iréf. La condition de charge extrême peut être exprimée dans le cas général par

$$\Delta T = k1*T4 - k2*T5 < 0$$

k1 et k2 étant des constantes prédéterminées.

Etant donné que cette condition dépend peu de Iréf, valeur difficile à garantir avec grande précision dans une production de masse, cette méthode de détection constitue un avantage important dans l'optique d'une diminution du coût du circuit intégré.

Dans les figures 4a et 4b, le train de 4 impulsions de durée T3 est représenté après l'apparition de la condition de charge extrême, ceci étant fait dans le but de faciliter la comparaison avec les figures 2a et 2b. En réalité, lorsque la condition de charge extrême est détectée, on peut interrompre l'alimentation pour économiser la consommation d'énergie du moteur car le train de 4 impulsions de durée T3 devient inutile.

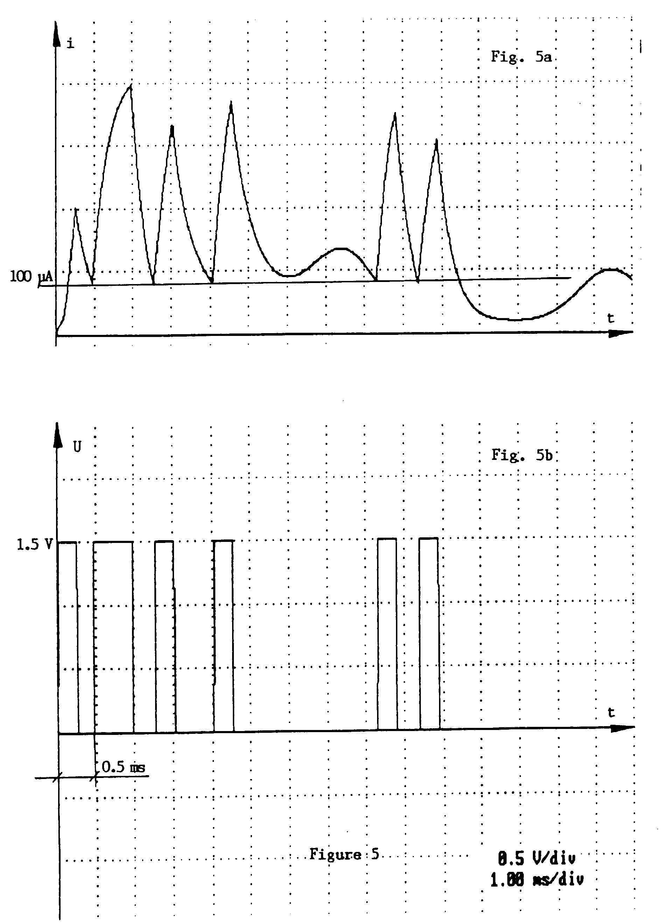

Les figures 5a et 5b représentent le courant et la tension du moteur lorsque la polarité de l'impulsion est différente de celle du rotor. Dans ce cas, on obtient aussi la condition analogue à celle de la condition de charge extrême, c'est-à-dire

$$\Delta T = T4 - T5 < 0$$

Le cas des polarités différentes peut apparaître lorsque le rotor du moteur perd un pas suite à un choc en dehors des impulsions d'alimentation.

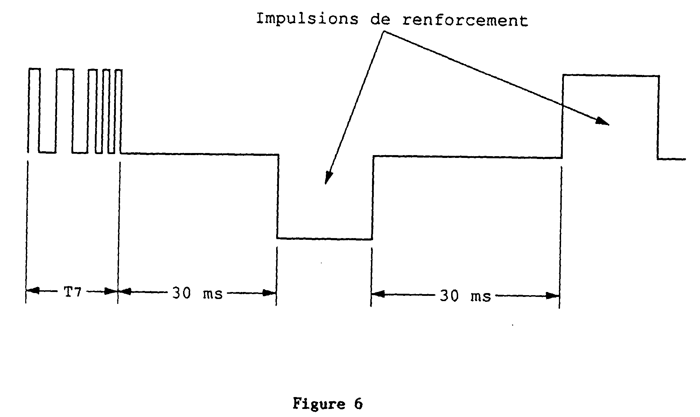

La figure 6 représente les impulsions de renforcement fournies aux moteurs lorsque la condition de charge extrême ou de polarités différentes est détectée. Ces impulsions de renforcement ont pour but de rattraper les pas perdus suite aux événements précités.

Les impulsions de renforcement sont composées de 2 impulsions de grandes énergies, de polarités différentes, alimentées à environ 30 ms d'intervalle après l'apparition des conditions de charge extrêmes ou de polarités différentes.

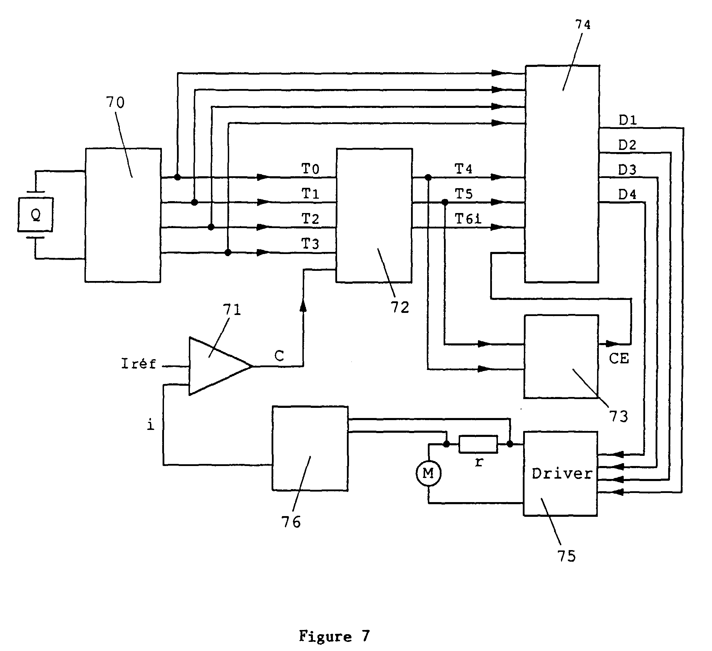

La figure 7 représente le schéma bloc d'un exemple de réalisation du procédé d'alimentation selon l'invention. Le signal de la base de temps provenant de l'oscillateur Q est envoyé au circuit de division et de mise en forme 70, à la sortie duquel on obtient la période d'alimentation T0 du moteur et les durées T1, T2 et T3 des impulsions partielles; les signaux T0, T1, T2, T3, ainsi que le signal C à la sortie du comparateur 71 sont envoyés dans le circuit logique 72, lequel fournit des intervalles variables T4, T5 et T6i. Les sorties T4 et T5 du circuit 72 sont envoyées dans le circuit logique de détection de charge extrême 73. Le circuit logique 74 reçoit à ses entrées les signaux T0, T1, T2, T3, T4, T5, T6i et la sortie CE du circuit 73 fournit les signaux de commande D1, D2, D3 et D4 à l'étage de sortie (Driver) 75. Une résistance de mesure r est branchée en série avec le moteur M à la sortie du Driver 75 et le bloc de mesure 76 transforme la tension aux bornes de la résistance r en un signal donnant l'image du courant i du moteur avant de l'envoyer au comparateur 71.

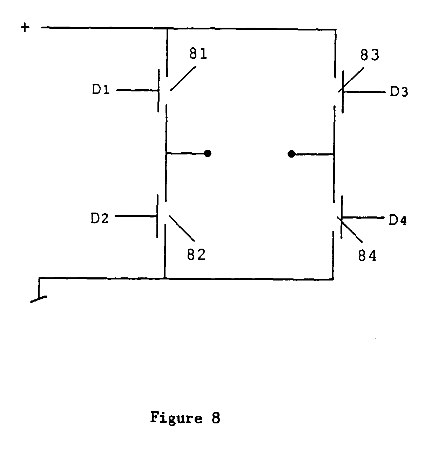

La figure 8 représente le détail de l'élément 75 (Driver) du schéma bloc de la figure 7. Les transistors de sortie 81, 82, 83 et 84 sont montés en pont en H et commandés par les signaux D1, D2, D3 et D4 provenant du circuit 74.

## Revendications

1. Procédé d'alimentation d'un moteur pas à pas monophasé pour pièce d'horlogerie, adapté pour fournir au moteur des impulsions de tension hachées de durée T7 variable en fonction des conditions de charge et de la tension d'alimentation et des impulsions de renforcement T10 succédant à l'impulsion de durée variable T7, caractérisé en ce que chaque dite impulsion de tension hachée T7 est formée d'une suite d'impulsions partielles de tension composée d'une impulsion de durée T1, d'une impulsion de durée T2 et d'une suite d'impulsions de durée T3 constante, les impulsions de durées T1, T2, T3 étant de même polarité, en ce que les intervalles de temps T4, T5 et T6, séparant lesdites impulsions partielles de tension sont variables en fonction des conditions de charge et en fonction de la tension d'alimentation du moteur et en ce que lesdites impulsions de renforcement T10 ne sont fournies au moteur que lorsque la condition de charge extrême définie par k1*T4 < k2*T5 apparaît, k1 et k2 étant des constantes prédéterminées.

2. Procédé selon la revendication 1, caractérisé en ce que pendant lesdits intervalles de temps T4, T5 et T6i, la bobine du moteur est mise en court-circuit.

3. Procédé selon les revendications 1 et 2, caractérisé en ce que l'intervalle de temps T4 est délimité par la fin de l'impulsion partielle T1 et par l'instant suivant cette fin où le courant de la bobine est plus petit ou égal au courant de référence Iréf, en ce que l'intervalle de temps T5 est délimité par la fin de l'impulsion partielle T2 et par l'instant suivant cette fin où le courant de la bobine est plus petit ou égal au courant de référence Iréf et en ce que chaque dit intervalle de temps T6i est délimité par la fin d'une impulsion partielle T3 et par l'instant suivant cette fin où le courant de la bobine est plus petit ou égal au courant de référence Iréf.

4. Procédé selon la revendication 1, caractérisé en ce que toute impulsion hachée est interrompue si le nombre total desdites impulsions partielles T4, T5 et T6i atteint une valeur maximale prédéterminée.

**5.** Procédé selon la revendication 1, caractérisé en ce que toute impulsion hachée est interrompue si un desdits intervalles de temps T6i dépasse la valeur k3*T4, k3 étant une constante prédéterminée.

**6.** Procédé selon une des revendications 1 à 5, caractérisé en ce que la bobine du moteur est mise en court-circuit entre deux dites impulsions hachées.

**7.** Procédé selon une des revendications 1 à 6, caractérisé en ce que la durée T3 est modifiée d'une première valeur à une deuxième valeur entre deux impulsions hachées T7 successives lorsque ladite condition de charge extrême k1*T4 < k2*T5 apparaît lors de la première des deux dites impulsions hachées successives.

**8.** Procédé selon une des revendications 1 à 7, caractérisé en ce que lesdites impulsions de renforcement T10 sont de même polarité ou de polarité opposée à celle de l'impulsion hachée T7.

**9.** Circuit d'entraînement d'un moteur pas à pas monophasé, pour la mise en oeuvre du procédé selon la revendication 1, comprenant un ensemble d'interrupteurs, des moyens de comptage de temps déterminant des périodes principales T0 se succédant avec une fréquence constante et des moyens de commande agissant sur les interrupteurs pour fournir au moteur au cours de chaque période principale une impulsion hachée formée d'une pluralité d'impulsions partielles et d'impulsions de renforcement dans les conditions de charge extrême, ces moyens comprenant un ou plusieurs détecteurs capables de déterminer la durée des impulsions partielles, caractérisé en ce que les moyens de comptage sont agencés pour définir des durées constantes délimitant les impulsions partielles et en ce que les moyens de commande comportent un détecteur réagissant aux intervalles de temps T4, T5 et T6i cour délimiter la durée totale de ladite impulsion hachée T7 et un détecteur réagissant aux intervalles de temps T4 et T5 pour fournir au moteur lesdites impulsions de renforcement.

## Patentansprüche

**1.** Verfahren zur Versorgung eines einphasigen Schrittmotors für eine Uhr, angepasst zum von Liefern zerhackten Spannungsimpulsen, an den Motor mit der Dauer T7 variabel in Funktion der Bedingungen der Last und der Versorgungsspannung und Verstärkungsimpulse T10 folgend auf den Impuls der variablen Dauer T7, dadurch gekennzeichnet, dass jeder genannte Impuls von zerhackter Spannung T7 aus einer Folge von partiellen Impulsen mit einer Spannung zusammengesetzt aus einem Impuls der Dauer T1 gebildet wird, einem Impuls der Dauer T2 und einer Folge von Impulsen mit konstanter Dauer T3, wobei die Impulse der Dauer T1, T2, T3 die gleiche Polarität aufweisen, und dass die Intervalle der Zeiten T4, T5 und T6, welche die genannten partiellen Spannungsimpulse trennen, variabel in Funktion der Bedingung der Last und in der Funktion der Versorgungsspannung des Motors sind und dass die genannten Verstärkungsimpulse T10 dem Motor nicht zugeführt werden, bis dass die extreme Lastbedingung, definiert durch k1*T4 < k2*T5 auftritt, wobei k1 und k2 vorbestimmte Konstanten sind.

**2.** Verfahren nach Patentanspruch 1, dadurch gekennzeichnet, dass während den genannten Zeitintervallen T4, T5 und T6i die Spule des Motors kurzgeschlossen ist.

**3.** Verfahren nach den Patentansprüchen 1 und 2, dadurch gekennzeichnet, dass das Zeitintervall T4 durch das Ende des partiellen Impulses T1 begrenzt ist und durch den Moment der diesem Ende folgt, wo der Strom der Spule kleiner oder gleich dem Referenzstrom Iref ist, wobei das Zeitintervall T5 durch das Ende des partiellen Impulses T2 begrenzt ist und durch den Moment, der auf dieses Ende folgt, bei welchem der Strom der Spule kleiner oder gleich dem Referenzstrom Iref ist und dass jedes Zeitintervall T6i durch das Ende eines partiellen Impulses T3 begrenzt ist und durch den Moment, der auf dieses Ende folgt, wo der Strom der Spule kleiner oder gleich dem Referenzstrom Iref ist.

**4.** Verfahren nach Patentanspruch 1, dadurch gekennzeichnet, dass der gesamte zerhackte Impuls unterbrochen wird, wenn die totale Zahl der genannten partiellen Impulse T4, T5 und T6i einen vorbestimmten maximalen Wert erreicht.

**5.** Verfahren nach Patentanspruch 1, dadurch gekennzeichnet, dass der gesamte zerhackte Impuls unterbrochen wird, wenn eines der genannten Zeitintervalle T6i den Wert k3*T4 überschreitet, wobei k3 eine vorbestimmte Konstante ist.

**6.** Verfahren nach einem der Patentansprüche 1 bis 5, dadurch gekennzeichnet, dass die Spule des Motors zwischen zwei der genannten zerhackten Impulse kurzgeschlossen wird.

7. Verfahren nach einem der Patentansprüche 1 bis 6, dadurch gekennzeichnet, dass die Dauer T3 von einem ersten Wert auf einen zweiten Wert zwischen zwei aufeinanderfolgenden zerhackten Impulsen T7 geändert wird, wenn die genannte Bedingung der extremen Last k1*T4 < k2*T5 auftritt seit dem ersten der beiden genannten aufeinanderfolgenden zerhackten Impulse.

8. Verfahren nach einem der Patentansprüche 1 bis 7, dadurch gekennzeichnet, dass die genannten Verstärkungsimpulse T10 die gleiche Polarität oder die entgegengesetzte Polarität zu derjenigen des zerhackten Impulses T7 aufweisen.

9. Schaltung zum Antrieb eines einphasigen Schrittmotors zur Durchführung des Verfahrens gemäss Patentanspruch 1 mit einem Satz von Unterbrechern, Mittel zum Zählen der Zeit, welche die Hauptperioden T0 bestimmt, welche mit einer konstanten Frequenz aufeinander folgen und Betätigungsmittel, welche auf die Unterbrecher wirken, um dem Motor während jeder Hauptperiode einen zerhackten Impuls zu liefern, der aus einer Mehrzahl von partiellen Impulsen gebildet wird und Verstärkungsimpulse unter Bedingungen der extremen Last, die Mittel einen oder mehrere Detektoren umfassen, die fähig sind, die Dauer der partiellen Impulse zu bestimmen, dadurch gekennzeichnet, dass die Zählmittel derart angeordnet sind, um die konstanten Dauern zu definieren, welche die partiellen Impulse begrenzen und dass die Betätigungsmittel einen Detektor umfassen, der auf die Zeitintervalle T4, T5 und T6i reagiert, um die totale Dauer des genannten zerhackten Impulses T7 zu begrenzen, und dass ein Detektor vorhanden ist, der auf die Zeitintervalle T4 und T5 reagiert, um dem Motor die genannten Verstärkungsimpulse zu liefern.

## Claims

1. Method of feeding a single-phase stepping motor for a timepiece, adapted to supply the motor with chopped voltage pulses of a duration T7 variable as a function of the load conditions and the supply voltage, and reinforcing pulses T10 succeeding the pulse of variable duration T7, characterized in that each said chopped voltage pulse T7 is formed of a train of partial voltage pulses composed of a pulse of a duration T1, a pulse of a duration T2, and a train of pulses of a constant duration T3, the pulses of durations T1, T2, T3 being of the same polarity, in that the intervals of time T4, T5, and T6 separating said partial voltage pulses are variable as a function of the load conditions and as a function of the supply voltage of the motor, and in that said reinforcing pulses T10 are supplied to the motor only when the extreme load condition defined by $k1 \bullet T4 < k2 \bullet T5$ appears, k1 and k2 being predetermined constants.

2. Method according to claim 1, characterized in that during said intervals of time T4, T5, and T6i, the coil of the motor is short-circuited.

3. Method according to claims 1 and 2, characterized in that the interval of time T4 is delimited by the end of the partial pulse T1 and by the moment following that end when the current of the coil is equal to or less than a reference current Iref, in that the interval of time T5 is delimited by the end of the partial pulse T2 and by the moment following that end when the current of the coil is equal to or less than the reference current Iref, and in that each said interval of time T6i is delimited by the end of a partial pulse T3 and by the moment following that end when the current of the coil is equal or less than the reference current Iref.

4. Method according to claim 1, characterized in that any chopped pulse is interrupted if the total number of said partial pulses T4, T5 and T6i reaches a predetermined maximum value.

5. Method according to claim 1, characterized in that any chopped pulse is interrupted if one of said intervals of time T6i exceeds the value $k3 \bullet T4$, k3 being a predetermined constant.

6. Method according to one of the claims 1 to 5, characterized in that the coil of the motor is short-circuited between two said chopped pulses.

7. Method according to one of the claims 1 to 6, characterized in that the duration T3 is modified from a first value to a second value between two successive chopped pulses T7 when said extreme-load condition $k1 \bullet T4 < k2 \bullet T5$ appears at the time of the first of the two said successive chopped pulses.

8. Method according to one of the claims 1 to 7, characterized in that said reinforcing pulses T10 are of the same polarity as or of the opposite polarity to that of the chopped pulse T7.

9. Circuit for driving a single-phase stepping motor for carrying out the method according to claim 1, comprising an assembly of switches, time-counting means determining main periods T0 succeeding one another at a constant frequency, and control means acting on the switches for supplying the motor during each main period with a chopped pulse formed of a plurality of partial pulses and reinforcing pulses under extreme load conditions, these means including one or more sensors capable of determining the duration of the partial pulses, characterized in that the counting means are arranged to define constant durations delimiting the partial pulses, and in that the control means include a sensor reacting to the intervals of time T4, T5, and T6i for delimiting the total duration of said chopped pulse T7 and a sensor reacting to the intervals of time T4 and T5 for supplying the motor with said reinforcing pulses.

Figure 1

Fig. 2a

Fig. 2b

0.5 V/div
0.50 ms/div

Figure 2

Figure 3

Fig. 4a

Iréf
100 μA

U

T61    T62    T63

T1 | T4 | T2 | T5 | T3 | T3 | T3 | T3

1.5 V

Fig. 4b

0.5 ms

Figure 4

8.5 V/div
8.58 ms/div

12

Fig. 5a

Fig. 5b

Figure 5

0.5 V/div
1.00 ms/div

Impulsions de renforcement

Figure 6

**Figure 7**

Figure 8